# EUROPEAN PATENT APPLICATION

(11) **EP 0 947 406 A2**
(43) Date of publication of application: **06.10.1999**
(21) Application number: 99500053.6
(22) Date of filing: 31.03.1999
(51) Int. Cl.: B60S 5/00, B25B 27/30, B60G 15/06

(54) **Device for disassembling automotive suspension systems**

(30) Priority: 02.04.1998 AR 9801488
(71) Applicant: Herramientas Davidson, S.A., 1426 Buenos Aires (AR)
(72) Inventor: Davidson, Ricardo Guillermo, 1414 Buenos Aires (AR)
(74) Representative: Fernandez Lerroux, Aurelio

(57) **Abstract**

A device for disassembling automotive suspension systems, particularly for taking apart the spring and shock absorber in a Mc Pherson system, the device enabling any one even without skillfulness in the art to remove a spring/shock absorber assembly in an automotive vehicle, the device comprising a support having a pair of parallel spaced apart columns and compressing arms slidably mounted along the columns for engaging an end of the spring to retain the spring against the support, the compressing arms being actuated by a driving mechanism capable of being operated to move the compressing arms for compressing the spring to detach the spring/shock absorber assembly out from the vehicle.

## Description

### BACKGROUND OF THE INVENTION

### Field of the invention.

The present invention relates to mechanics field and particularly refers to device for removing a spring/shock absorber assembly in an automobile, truck and any other vehicle using the assembly, and more particularly the invention relates to a device for disassembling an automotive suspension system and taking apart the spring and shock absorber of a Mc Phearson suspension system.

### Description of the Prior Art.

The frame and structure of a vehicle is supported by a suspension system, whereby such frame and structure remain attached to the wheels. The purpose of the suspension system is to absorb road shocks caused by irregularities in the road surface and improve safety and road-handling ability by maintaining better contact between the wheels and the road.

In the modern motor vehicles each wheel is connected to the vehicle body through an independent suspension system generally comprising a spring to offer support to the vehicle and a shock absorber to help smooth out the spring action. The spring has upper and lower ends respectively connected to the vehicle frame and to control arms of the wheel. The shock absorber is so connected and is extended coaxial and inside the spring to damp out the vibrations of the spring. Since the spring purpose is to support the weight of the vehicle frame and body any one skilled in the art is aware that a suspension spring must be strong and formed by thick coils made of steel or any other appropriate material and the counter force exerted by the spring when is compressed under the weight of the vehicle is enormous. Thus, the operation of removing a suspension spring from a vehicle when the suspension system must be repaired or some part must be replaced is very cumbersome and, particularly, very dangerous to the worker. If a spring that is being removed from the car is suddenly detached from the suspension assembly all the stored energy in the form of constrained force is released and the spring may be ejected with the risk of impacting on the worker or even any other personnel near the car.

When suspension systems must be disassembled today few extracting tools are available just to retain the spring in a compressed condition, but all of them are rudimentary tools and extractors that do not provide safety and reliability for the worker.

It would be therefore very necessary and convenient to count on a device that enables a worker, mechanic and even a non skilled person to take apart the components of a suspension system without the risk of the spring being accidentally released from the device.

### Summary of the Invention.

It is therefore one object of the present invention to provide a device for disassembling a suspension system in cars, automobiles, trucks, and general vehicles using suspensions with springs and shock absorbers, without any damage risk for the personnel and with the safety and reliability to get a fast and effective task.

It is still another object of the present invention to provide a device for disassembling automotive suspension systems, particularly for taking apart the spring and shock absorber in a Mc Phearson system, the device enabling any one even without skillfulness in the art to remove a spring/shock absorber assembly in an automotive vehicle, the device comprising a support having a pair of parallel spaced apart columns and compressing arms slidably mounted along the columns for engaging an end of the spring to retain the spring against the support, the compressing arms being actuated by a driving mechanism capable of being operated to move the compressing arms for compressing the spring to detach the spring/shock absorber assembly out from the vehicle.

It is a further object of the present invention to provide a device for disassembling automotive suspension systems, particularly for taking apart the spring and shock absorber in the system, comprising a support having an upper end portion and a lower end portion, a pair of parallel spaced apart columns having respective upper and lower ends thereof connected to the upper and lower portion of the support, respectively, compressing means slidably mounted along the columns for engaging an end of the spring to retain the spring against the support, and driving means connected at an upper end thereof to the upper end portion of the support and, at a lower end to the compressing means, whereby the driving means are actuated to move the compressing means and compress the spring when spring is retained between the compressing means and the lower end of the support.

It is even another object of the present invention to provide a device for disassembling automotive suspension systems, particularly for taking apart the spring and shock absorber in the system, that comprises a simple and straightforward construction, easy so operate either by pure mechanical driving means consisting of a threaded endless rod or hydraulic rams, jacks or cylinders wherein the worker has no force to exert necessary to compress the spring of the system.

The above and other objects, features and advantages of this invention will be better understood when taken in connection with the accompanying drawings and description.

### BRIEF DESCRIPTION OF THE DRAWINGS

The present invention is illustrated by way of example in the following drawings wherein.
FIG. 1 shows a perspective, partially exploded view of one embodiment of the device of the invention;
FIG. 2 shows an elevation front view of the device of FIG. 1 in a position just before compressing a spring of the suspension system, without the shock absorber being illustrated for clarity purposes;
FIG. 3 shows an elevation front view like in FIG. 2, with the device in a position compressing the spring; and
FIG. 4 shows a perspective, partially exploded view, similar to FIG. 1, of another embodiment of the device of the invention.

### DESCRIPTION OF THE PREFERRED EMBODIMENTS

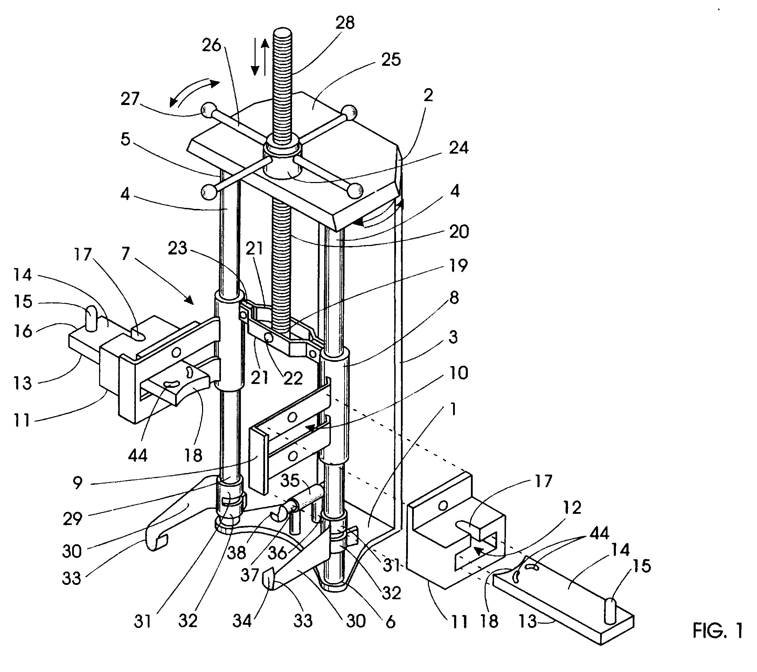

Now referring in detail To the drawings it may be seen from FIG. 1 that an embodiment of the device of the invention comprises a support formed by a lower end portion consisting of a lower end plate 1 and an upper end portion consisting of an upper end plate 2, both end plates being fixed to an elongated back plate 3 and normally extending from this back plate at respective lower and upper ends of the back plate. A pair of parallel spaced apart columns 4 having a circular cross-section extend parallel to back plate 3 and are connected at their upper ends to plate 2 and their lower ends to lower plate 1 of the support.

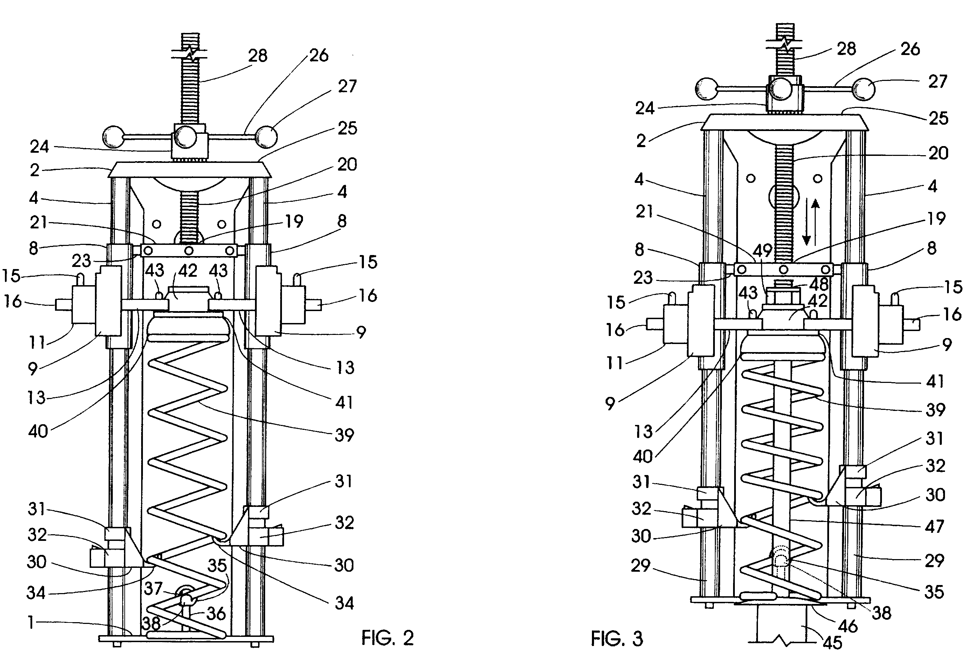

Compressing means 7 are slidably mounted along columns 4 for engaging an end of a spring shown in FIG. 2 and 3 under reference number 39, whereby the spring may be firmly retained between compressing means 7 and the support. Compressing means 7 comprise a pair of arms 9 each one connected to a sleeve 8 which in turn is slidably connected to an associated column 4 and capable of running along the column. Each arm 9 normally projects from the respective sleeve 8 and is formed by an horizontal plate having an elongated opening or notch 10 and a guide block 11 that is firmly fixed to the arm. Block 11 has in turn an opening 12 having a size and shape related to opening 10 to receive a compressing plate 13 that is slidably arranged inside the openings 10 and 12 and is capable of being manually slidably moved to engage an upper end of the spring and retain the same in a compressed condition, as it will be better disclosed in relation to FIG. 2, 3. A little handle 15 is provided on an upper face 14, as a rear end 16, of the compressing plate to manipulate plate 13 in and out of openings 10, 12 and in and out of respective operative and inoperative positions. Block 11 also includes an upper notch 17 to receive handle 15 when plate 13 is actuating onto upper end of spring 39. Plate 13 has a leading end 18 defining a curved, preferably circular edge capable of accompanying the shape of most of the ends and plates or headers used at the upper ends of spring 39, these elements, plates or headers being used to provide a firm mounting of the shock absorber and the spring.

Sleeves 8 are connected to each other by means of bridge formed by a pair of facing plates 21 the purpose of which is connect the compressing arms to driving means comprising, in this embodiment, a threaded rod 20 arranged at an intermediate position between columns 4. Facing plates 21 extend at both sides of a lower end 19 of rod 20 and are connected to end 19 by means of a bolt 22. That is rod 20 is prevented from rotating but is capable of moving up and down to move the sleeves and the compressing arms along the columns to compress the spring. Plates 21 are pivotally connected at the ends thereof to each other and to respective ears 23 projecting from sleeves 8, whereby the connection between the bridge formed by plates 21 and the compressing arms 8/9 are not rigid but articulated.

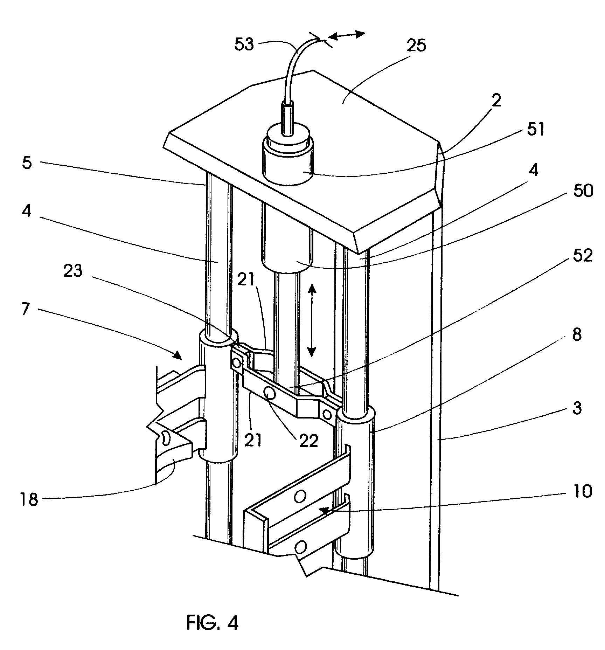

In the embodiment of FIG. 1-3 the driving means comprise rod 20 but, as it is shown in FIG. 4 it may comprise any suitable mechanism such as a hydraulic jack, ram or cylinders. Rod 20 preferably comprises an endless screw having at least one helical thread length, the rod freely passing through upper end plate 2 through an orifice (not shown) with a rotating handle 24 being arranged against surface 25 of the upper end plate and having radially projecting arms 26 ending in spheres 27 to easily rotate the handle by the hands of a worker. Handle 24 is internally threaded so as to be threadably connected to the rod, whereby when the handle is rotated the rod is longitudinally moved up and down to decompress and/or compress the spring. Rod 20 has a length enough, as shown by portion 28 extending upwards plate 2, to move compressing means 7 down a length enough to compress the spring to a desired extent.

At a lower end or portion 29 of columns 4 the device provides adjusting means close to the lower end of the support, for retaining a lower end of the spring, while the compressing means engage the upper end of the spring. The adjusting means comprise a pair of retaining arms 30 normally projecting from the respective columns, each arm having an end defining a sleeve or ring clamps 31, 32 to embrace the respective column so as to be rotatably connected to the column. Each arm 30 also having an opposite end defining a retaining hook 34 for engaging a turn or coil of the spring. The adjusting means also comprise an additional intermediate extensible retaining arm assembly 35-38 located between the columns, the extensible arm assembly comprising a tubular support 35 fixed to plate 1 by two pillars 36, an extensible arm 37 being slidably inserted inside tubular support 35 to move in and out of the tubular support. Arm 37 is provided at a projecting end thereof with a hook 38 for engaging a coil or turn of the spring. As it will be evident for any one skilled in the art arms 30 and 37 are provided with a wide variety of movements to easily engage the turns and coils of different sizes and shapes of the springs.

In operation, as it is shown in FIG. 1 and 2, the device of the invention is placed against spring 39 and hooks 34 and 38 are placed so as to seat on a selected turn or coil of the spring. In addition, plates 13 are moved into opening 10 and engaged onto the upper part of spring 39, particularly onto a header assembly comprising a plate 41 and resilient pieces 40, 42 for mounting a shock absorber 45 as it is shown in FIG. 3. Plates 13 are placed as shown in FIG. 2 in a manner that two pairs of fingers 43 provided in plate 41 pass through notches 44 arranged close to end 18 of each plate 13 (FIG: 1). The purpose of notches 44 is to prevent plates 13 to accidentally detach from spring 39. Once in this position, shown in FIG. 2, handle 24 is rotated to make rod 20 to move down in order to compress spring 39. To facilitate rotation, handle 24 may comprise a ball bearing (not shown) in order to avoid any friction between the several relatively moving parts such as the handle body 24, rod 20 and surface 25.

Once compressing the spring is shortened as it shown in FIG. 3. In FIG. 3 a shock absorber 45 is shown, the shock absorber including a peripheral circular flange 46 against which the lower end of spring 39 is resting. A stem 47 of the shock absorber longitudinally passes through the spring and projects beyond piece 42. Once the spring is compressed as shown in FIG. 3, for example, a nut 49 may be threaded on stem 47 to retain all the assembly formed by the shock absorber and the spring firm in the compressed position. Once the nut has been firmly adjusted, handle 24 may be rotated to move rod 20 upwardly so as to release the spring and the shock absorber from the device of the invention. Alternatively, the assembly may be disassembled by letting the spring to expand within the device until reaching its original extension and the shock absorber removed from the spring. To prevent any possibility that spring 39 moves out of the inventive device a protecting plate, not shown, may be removably mounted on the compressing means 7, particularly on arms 9 or may be slidably mounted along columns 4.

As stated above rod 20 may be replaced by another driving means such as a hydraulic ram 50 shown in FIG. 4. In this Figure all the equivalent components have maintained their numeral references like in FIG. 1-3 with new reference numbers being used to identify the new driving means according to this another embodiment of the invention. Hydraulic ram 50 has an upper end 51 thereof connected to upper end plate 2 while a lower end 52 of the ram is connected to bridge plates 21. Upper end 51 is provided with connections 53 to any suitable pressurized fluid supplying source (not Shown). Such parts of the embodiment shown in FIG. 4 that are not part of the driving means and are not shown in the Figure are the same or equivalent to those shown in FIG. 1-3.

While preferred embodiments of the present invention have been illustrated and described, it will be obvious to those skilled in the art that various changes and modifications may be made therein without departing from the scope of the invention as defined in the appended claims.

## Claims

1. A device for disassembling automotive suspension systems, particularly for taking apart the spring and shock absorber in the system, comprising:
a support having an upper end portion and a lower end portion
a pair of parallel spaced apart columns having respective upper and lower ends thereof connected to the upper and lower portion of the support, respectively,
compressing means slidably mounted along the columns for engaging an end of the spring to retain the spring against the support,
driving means connected at an upper end thereof to the upper end portion of the support and, at a lower end to the compressing means, whereby the driving means are actuated to move the compressing means and compress the spring when spring is retained between the compressing means and the lower end of the support.

2. The device of claim 1, wherein the upper and lower end portions of the support each comprises an end plate, both end plates being parallel and fixed to a back elongatad plate, parallel to the parallel columns.

3. The device of claim 1, wherein adjusting means are arranged at the lower ends of the columns, close to the lower end of the support, for retaining a lower end of the spring, while the compressing means engage an upper end of the spring.

4. The device of claim 3, wherein the compressing means comprise a pair of compressing arms each arm normally projecting from a respective sleeve, each sleeve slidably running along the associated column, each arm including a guide block including an elongated opening through which a compressing plate is passed, the compressing plate being slidably arranged inside the opening and capable of being manually slidably moved to engage the upper end of the spring and retain the same in a compressed condition.

5. The device of claim 4, wherein the sleeves are connected to each other by means of a bridge, the bridge being connected to the lower end of the driving means, whereby when the driving means are actuated the means actuate on the bridge to move the sleeves and the compressing arms along the columns to compress the spring.

6. The device of claim 1, wherein the driving means comprise a rod having at least one helical thread length, the rod freely passing through the upper end portion of the support, a rotating handle being arranged in the upper end portion and threadably connected to the rod, whereby when the handle is rotated the rod is longitudinally moved to compress or decompress the spring retained between the compressing means and the support.

7. The device of claims 6 and 5, wherein the bridge comprises a pair of transverse plates pivotally connected at respective ends thereof to the sleeves and to each other, both plates being firmly fixed, at a middle part thereof, to the lower end of the threaded rod.

8. The device of claim 3, wherein the adjusting means for retaining the lower end of the spring comprise a pair of retaining arms normally projecting from the respective columns, each arm having an end defining a sleeve rotatably connected to the column and an opposite end defining a retaining hook for engaging a coil of the spring.

9. The device of claim 8, wherein the adjusting means comprise an additional intermediate extensible retaining arm located between the columns, the extensible arm having a projecting end defining a hook for engaging a coil of the spring.

10. The device of claim 1, wherein the driving means comprises a hydraulic ram.

11. The device of claim 10, wherein the upper and lower end portions of the support each comprises an end plate, both end plates being parallel and fixed to a back elongated plate, parallel to the parallel columns.

12. The device of claim 10, wherein adjusting means are arranged at the lower ends of the columns, close to the lower end of the support, for retaining a lower end of the spring, while the compressing means engage an upper end of the spring.

13. The device of claim 12, wherein the compressing means comprise a pair of compressing arms each arm normally projecting from a respective one of said sleeves, each sleeve slidably running along the associated column, each arm including a guide block including an elongated opening through which a compressing plate is passed, the compressing plate being slidably arranged inside the opening and capable of being manually slidably moved to engage the upper end of the spring and retain the same in a compressed condition.

14. The device of claim 13, wherein the sleeves are connected to each other by means of a bridge, the bridge being connected to the hydraulic ram.

15. The device of claim 11 and 14, wherein the hydraulic ram has an upper end firmly connected to the end plate of the upper end portion of the support and a lower end connected to said bridge, whereby when the hydraulic ram is actuated the means actuate on the bridge to move the sleeves and the compressing arms along the columns to compress the spring.

16. The device of claims 14 and 15, wherein the bridge comprises a pair of transverse plates pivotally connected at respective ends thereof to the sleeves and to each other, both plates being firmly fixed, at a middle part thereof, to the lower end of the hydraulic ram.

17. The device of claim 12, wherein the adjusting means for retaining the lower end of the spring comprise a pair of retaining arms normally projecting from the respective columns, each arm having an end defining a sleeve rotatably connected to the column and an opposite end defining a retaining hook for engaging a coil of the spring.

18. The device of claim 17, wherein the adjusting means comprise and additional intermediate extensible retaining arm located between the columns, the extensible arm having a projecting end defining a hook for engaging a coil of the spring.
